Europäisches Patentamt

European Patent Office

Office européen des brevets

(19)

(11) Veröffentlichungsnummer: **0 136 281**
**B1**

(12) # EUROPÄISCHE PATENTSCHRIFT

(45) Veröffentlichungstag der Patentschrift:
28.12.88

(21) Anmeldenummer: **84890157.5**

(22) Anmeldetag: **17.08.84**

(51) Int. Cl.⁴: **B 65 D 8/04**

(54) **Mehrwegbehälter aus Stahl.**

(30) Priorität: **22.08.83 AT 2984/83**

(43) Veröffentlichungstag der Anmeldung:
**03.04.85 Patentblatt 85/14**

(45) Bekanntmachung des Hinweises auf die Patenterteilung:
**28.12.88 Patentblatt 88/52**

(84) Benannte Vertragsstaaten:
**AT BE CH DE FR IT LI**

(56) Entgegenhaltungen:
**AT-B- 319 136**
**DE-A- 1 918 548**
**DE-C- 625 962**
**GB-A- 1 016 735**
**GB-A- 2 105 673**

(73) Patentinhaber: **VEREINIGTE EDELSTAHLWERKE
AKTIENGESELLSCHAFT (VEW), Elisabethstrasse 12,
A-1010 Wien (AT)**

(72) Erfinder: **Ebner, Oswald, Steinfeldsiedlungsgasse 392,
A-8680 Mürzzuschlag (AT)**
Erfinder: **Hochrinner, Franz, Untere
Waldrandsiedlungsgasse 18, A-8680 Mürzzuschlag (AT)**
Erfinder: **Osberger, Helmut, A-3491 Strass bei Krems
(AT)**
Erfinder: **Winkler, Erwin, Joseph Lister-Gasse 32,
A-1130 Wien (AT)**

## Beschreibung

Mehrwegbehälter aus Stahl, insbesondere rostfreiem Stahl, für vorzugsweise kohlensäurehaltige Flüssigkeiten, z. B. Getränke, aus zwei miteinander metallisch, z. B. durch Schweissen verbundenen, im wesentlichen rotationssymmetrisch ausgebildeten Hohlschalen, die an ihren gegenüberliegenden Enden jeweils einen durch Schweissen verbundenen Trag- bzw. Standring aufweisen, wobei die Hohlschalen aus einem die Mantelfläche bildenden Bereich und je einem Boden bestehen, wobei der mittlere Bereich des Behälters durchgehend zylindrisch ausgebildet ist, an dem die Böden über einen kegeligen und balligen Bereich anschliessen (GB-A- 1 016 735).

Die Mehrwegbehälter aus Stahl, welche in der Lebensmittelindustrie zum Einsatz kommen, unterliegen einer besonders starken und breiten Beanspruchung. Eine wesentliche Voraussetzung für derartige Behälter ist die Verwendung einer Legierung, welche den korrosiven Beanspruchungen durch die Lebensmittel gewachsen ist. Hiebei muss berücksichtigt werden, dass die Aufnahme von auch nur geringen Mengen an Metallen zu einer geschmacklichen Beeinträchtigung führen kann, sodass verschiedene Legierungen, z. B. Leichtmetallegierungen, einen nur sehr begrenzten Einsatzbereich aufweisen. Weiters ist die bei Behältern aus Leichtmetallen bestehende Gefahr des Verbeulens sehr gross, wobei derartige Beulen Vertiefungen, Kerben, Einschnitte, Rillen u. dgl. bedingen, welche ausgesprochen schwer zu reinigen sind. Aus diesem Grund hat sich Stahl, insbesondere korrosionsfester, rostfreier Stahl, für den Einsatz in der Lebensmittelindustrie besonders bewährt.

Aus der AT-A- 319 136 ist ein Bierfass bekannt, das aus zwei Hohlschalen gebildet ist, die durch Verschweissen miteinander verbunden sind. Beide Hohlschalen weisen an ihren einander gegenüberliegenden Enden Stand- bzw. Tragringe auf, die im Übergangsbereich zwischen dem zylindrischen Bereich und dem Boden mit den Hohlschalen verbunden sind. Eine derartige Konstruktion hat sich hervorragend bewährt. Dieses Fass weist, wie bekannt, Hohlsicken auf, wodurch die Stabilität erhöht wird und andererseits ein Rollen der Fässer besonders leicht ermöglicht ist. Beim Hantieren dieser Fässer, die im gefüllten Zustand ein relativ hohes Gewicht, z. B. 60 kg, aufweisen, ist die Gefahr, dass derartige Fässer mit Schwung gegeneinander bewegt werden, relativ gering. Damit werden diese Fässer, wenn sie gegeneinander geschlagen werden, auch nur geringfügig in ihrer Kontur, durch Dellen u. dgl., verändert. Ist es aber so, dass derartige Behälter für geringere Volumina bestimmt sind und das Breiten- zu Höhenverhältnis wesentlich geändert wird, sodass ein höherer Behälter entsteht, so kommt es zu Dellen, Einschlägen u. dgl. im Bereich, der sich oberhalb bzw. unterhalb der Stand- bzw. Tragringe befindet. Diese Dellen bewirken jedoch, dass im Behälterinneren Infektionskeime zurückbleiben können, wodurch die Haltbarkeit der flüssigen Lebensmittel im Behälter beeinträchtigt werden kann.

Aus der GB-A- 1 269 626 ist ein stapelbares Bierfass bekannt, das aus zwei zylindrischen Schüssen besteht, die miteinander verschweisst sind, welche jeweils eine Rollsicke aufweisen und deren Ende jeweils eingerollt ist, wodurch ein Stand- bzw. Tragring gebildet wird. Der Tragring ist nach Innen versetzt, sodass derartige Behälter übereinander gestapelt werden können, und zwar in der Form, dass ein Standring eines Fasses über den Tragring eines anderen Fasses hinweggreift. Der obere und der untere Boden wird durch Einschweissen entsprechender Formstücke in die Schüsse gebildet, wobei zwischen Schuss und Boden Spalten entstehen können, die Infektionsherde bilden. Ein derartiges Fass ist weder so ausgebildet, dass es beim Transport nur geringer Beanspruchung durch Dellen o. dgl. ausgesetzt ist noch ist das Innere frei von Spalten, Nischen u. dgl., sodass eine extrem hohe Infektionsgefahr bei diesem Fass besteht.

Nach der eingangs erwähnten GB-A- 1 016 735 ist ein Bierfass aus Aluminium oder Stahl bekannt, welches an seinem oberen bzw. unteren Ende einen in Guss gefertigten Stand- bzw. Tragring aufweist. Die beiden Böden sind über einen balligen Bereich mit dem mittleren Teil des Fasses verbunden, welcher zwei entweder in das Fass eingeformte Rollsicken bzw. angeformte Reifen aufweisen kann. Durch diese Rollsicken wird entweder die Infektionsgefahr erhöht, und zwar insbesondere dann, wenn diese zweckgemäss verwendet werden, da es zu kleinen Einkerbungen od. dgl. zwangsläufig kommt, wodurch im Inneren schwer zu reinigende Bereiche entstehen, bzw. bewirken angeformte Rollsicken ein erschwertes Manipulieren, wodurch erneut ein Gegeneinanderschlagen der Behälter verursacht wird, sodass diese erneut im Gebrauch Dellen erhalten, wobei die Stand- bzw. Tragringe aus Guss, da diese eine höhere Festigkeit als der Behälter als solcher aufweist, erneut eine grössere Deformationsgefahr darstellen. Eine optimale Raumausnützung ist jedoch durch die übliche Fassform nicht gegeben, die Handhabbarkeit lässt zu wünschen übrig.

Die vorliegende Erfindung hat sich zur Aufgabe gestellt, einen Mehrwegbehälter zu schaffen, der besonders leicht zu reinigen bzw. zu sterilisieren ist, selbst wenn der Behälter bereits längere Zeit in Einsatz war, welcher einen besonders geringen Platzbedarf aufweist und der so ausgebildet ist, dass bei der Manipulation der Behälter diese nicht einander, gleichgültig ob leer oder gefüllt, verbeulen. Erfindungsgemäss wird das Ziel dadurch erreicht, dass der zylindrische Bereich eine Höhe aufweist, die etwa dem Durchmesser des Behälters entspricht, und dass der Boden der einen Hohlschale eine axiale, kreisförmige Vertiefung aufweist, die im wesentlichen der Fläche der im Boden der anderen Hohlschale angeordneten Entnahme- und Füllöffnungsfläche entspricht.

Bei einer derartigen Konstruktion ist einerseits sichergestellt, dass ein Behälter geschaffen werden kann, der lediglich eine Rundnaht aufweisen muss, wobei gleichzeitig durch den balligen bzw. kegeligen Bereich eine Stossfläche mit hoher innerer Festigkeit gebildet und eine weitere Versteifung durch den Stand- bzw. Tragring gegeben ist. Weiters ist das Leervolumen und das Leergewicht bezogen auf die zu transportierende Flüssigkeit gering gehalten. Ausserdem können identische Hohlschalen verwendet werden, wobei gleichzeitig durch diese Vertiefung ein Spund ausgebildet ist, der die Entnahme der Flüssigkeit besonders vorteilhaft erlaubt und eine vollständige Entleerung ermöglicht.

Gemäss einem weiteren Merkmal der Erfindung ist der Tragring in gleicher axialer und radialer Entfernung mit der Hohlschale verbunden wie der Standring mit der Hohlschale. Durch diese Ausbildung kann beim gemeinsamen Anordnen der Behälter auf einem Transportwagen eine gegenseitige Beschädigung der Fässer besonders gering gehalten werden.

Weist der Standring eine rotationssymmetrische, bezogen auf die Längsachse des Behälters, ausgebildete Stufe auf, deren Stufen-Innendurchmesser dem Innendurchmesser des axialen Endbereiches des Tragringes entspricht, so ist eine besonders einfache und saubere Lösung zum Stapeln der Behälter geschaffen, wobei durch die spezifische Anordnung der Trag- und Standringe eine besonders hohe Stapelbarkeit gegeben ist.

Sind die Stand- und/oder Tragringe an den mit den Hohlschalen verbundenen Bereichen zum Behälterinneren abgewinkelt weisend ausgebildet, so kann einerseits eine besonders gute Verbindung derselben mit den Hohlschalen erfolgen, wobei gleichzeitig eine gewisse federnde Kraftaufnahme durch die Ringe, bei Beanspruchung derselben, erfolgt.

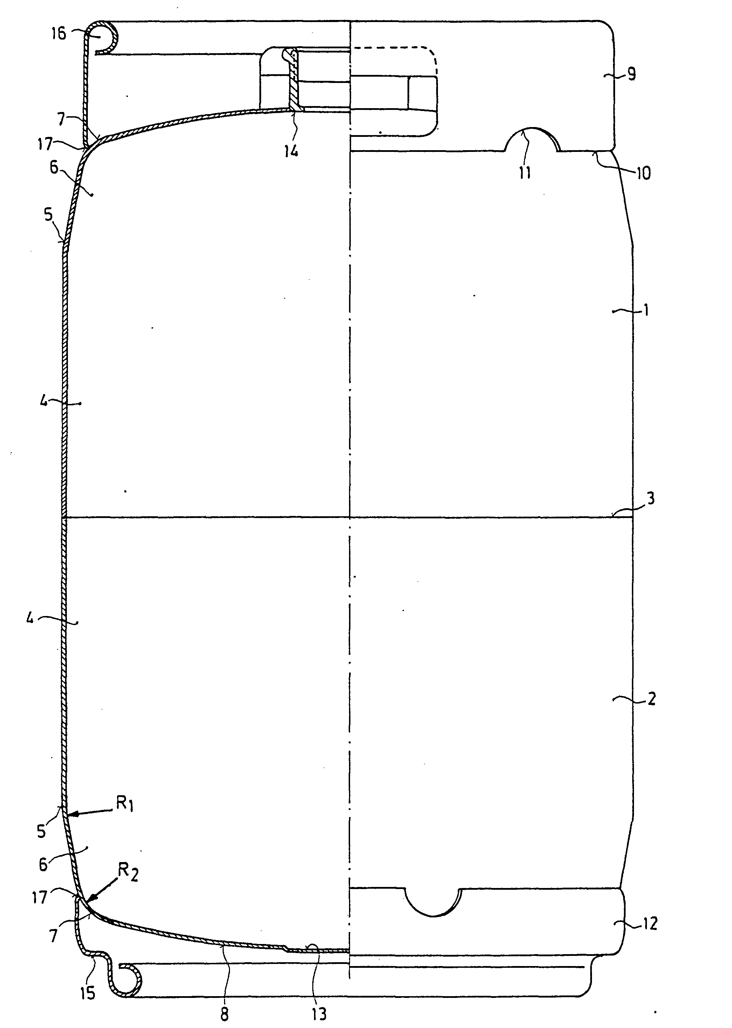

Im folgenden wird die Erfindung an Hand der Zeichnung näher erläutert.

Das in der einzigen Figur dargestellte Fass weist zwei Hohlschalen 1, 2 auf, die über eine Schweissnaht 3 miteinander verbunden sind. Diese Verbindung kann durch Reibschweissen, Plasmaschweissen aber auch durch eine direkte Rollnaht od. dgl. erfolgen. Die Hohlschalen weisen jeweils einen zylindrischen Bereich 4 auf, der über eine Abrundung 5 mit einem Radius $R_1$ in einen kegeligen Bereich 6 übergeht, der seinerseits über eine Abrundung 7, welche einen Radius $R_2$ aufweist, der kleiner als der Radius $R_1$ ist, in einen Bodenbereich 8 übergeht, welcher, wie an sich bekannt, als Teilkugel ausgebildet ist.

Der Bereich 6 kann auch leicht ballig sein. Der Tragring 9 ist, wie insbesondere der nicht geschnitten dargestellten Hälfte der Zeichnung zu entnehmen, über eine Schweissnaht 10 mit der oberen Hohlschale verbunden. Der Tragring weist halbkreisförmige Ausnehmungen 11 auf, die insbesondere bei Waschvorgängen von Bedeutung sind, da dort das Waschwasser zum Abfliessen kommen kann. Die Verbindung des Tragringes 9 bzw. Standringes 12 mit der Schale erfolgt im kegeligen Bereich 6 bzw. im Übergangsbereich 7. Wie besonders deutlich der linken Hälfte der Zeichnung zu entnehmen, besitzt der untere Bodenbereich 8 eine kreisförmige Vertiefung 13, die im wesentlichen der Fläche der im oberen Bereich angeordneten Entnahme- und Füllfläche 14 entspricht. Der Standring 12 weist eine Stufe 15 auf, deren Innendurchmesser dem Innendurchmesser des axialen Endbereiches des Tragringes entspricht. Der umgebördelte Rand 16 des Tragringes kann somit in die Stufe 15 des Standringes eingreifen.

Die Trag- und Standringe weisen einen abgewinkelten Endbereich 17 auf, welcher zur Verbindung mit den Hohlschalen dient.

**Patentansprüche**

1. Mehrwegbehälter aus Stahl, insbesondere rostfreiem Stahl, für vorzugsweise kohlensäurehaltige Flüssigkeiten, z. B. Getränke, aus zwei miteinander metallisch, z. B. durch Schweissen verbundenen, im wesentlichen rotationssymmetrisch ausgebildeten Hohlschalen (1, 2), die an ihren gegenüberliegenden Enden jeweils einen durch Schweissen verbundenen Trag- bzw. Standring (9, 12) aufweisen, wobei die Hohlschalen (1, 2) aus einem die Mantelfläche bildenden Bereich (4) und je einem Boden (8) bestehen, wobei der mittlere Bereich (4) des Behälters durchgehend zylindrisch ausgebildet ist, an dem die Böden (8) über einen kegeligen und balligen Bereich (6, 7) anschliessen, dadurch gekennzeichnet, dass der zylindrische Bereich (4) eine Höhe aufweist, die etwa dem Durchmesser des Behälters entspricht, und dass der Boden (8) der einen Hohlschale (2) eine axiale, kreisförmige Vertiefung (13) aufweist, die im wesentlichen der Fläche der im Boden (8) der anderen Hohlschale (1) angeordneten Entnahme- und Füllöffnungsfläche (14) entspricht.

2. Mehrwegbehälter aus Stahl nach Anspruch 1, dadurch gekennzeichnet, dass der Tragring (9) in gleicher axialer und radialer Entfernung mit der Hohlschale (1) verbunden ist, wie der Standring (12) mit der Hohlschale (2).

3. Mehrwegbehälter aus Stahl nach Anspruch 1 oder 2, dadurch gekennzeichnet, dass der Standring (12) eine rotationssymmetrische, bezogen auf die Längsachse des Behälters ausgebildete Stufe (15) aufweist, deren Stufen-Innendurchmesser dem Innendurchmesser des axialen Endbereiches des Tragringes (9) entspricht.

4. Mehrwegbehälter aus Stahl nach einem der Ansprüche 1 bis 3, dadurch gekennzeichnet, dass die Stand- und/oder Tragringe (9, 12) an den mit den Hohlschalen (1, 2) verbundenen Bereichen (17) zum Behälterinneren abgewinkelt weisend ausgebildet sind.

**Claims**

1. A reusable steel container, in particular of stainless steel, for liquids, for example drinks, preferably containing carbon dioxide, comprising two hollow shells (1, 2) which are joined to each other by metallic means, for example by welding, and are made substantially axially symmetrical and which are provided on their opposite ends in each case with a carrying or supporting ring respectively (9, 12) joined by welding, the hollow shells (1, 2) comprising an area (4) which forms the generated surface and a base (8) in each case, and the middle area (4) of the container, to which the bases (8) are joined by way of a conical and convex area (6, 7), being made continuously cylindrical, characterized in that the cylindrical area (4) has a height which corresponds approximately to the diameter of the container, and the base (8) of one hollow shell (2) has an axial, circular depression (13) which essentially corresponds to the area of the removal and filling opening (14) provided in the base (8) of the other hollow shell (1).

2. A reusable steel container according to Claim 1, characterized in that the carrying ring (9) is joined to the hollow shell (1) at the same axial and radial distance as the supporting ring (12) is to the hollow shell (2).

3. A reusable steel container according to Claim 1 or 2, characterized in that the supporting ring (12) has a step (15) which is made axially symmetrical with respect to the longitudinal axis of the container and the inside step diameter of which corresponds to the inside diameter of the axial end region of the support ring (9).

4. A reusable steel container according to any one of Claims 1 to 3, characterized in that the carrying and/or supporting rings (9, 12) are formed pointing in an angled manner towards the interior of the container at the areas (17) joined to the hollow shells (1, 2).

## Revendications

1. Récipient réutilisable en acier, notamment acier inoxydable, de préférence pour des liquides contenant du gaz carbonique, des boissons par exemple, constitué de deux cuves creuses (1, 2) réalisées en symétrie de révolution pour l'essentiel, raccordées entre elles par une connexion métallique, par soudure par exemple, cuves qui présentent à leurs extrémités opposées un anneau soudé respectivement porteur et d'assise (9, 12), tandis que les cuves creuses (1, 2) se composent d'une zone (4) formant la paroi latérale et d'un fond (8), cependant que la zone médiane (4) du récipient est entièrement cylindrique et que les fonds (8) s'y raccordent par un secteur conique et bombé (6, 7), caractérisé en ce que la zone cylindrique (4) présente une hauteur qui correspond sensiblement au diamètre du récipient et en ce que le fond (8) de l'une des cuves creuses (2) présente un renfoncement axial circulaire (13), dont la surface correspond pour l'essentiel à celle de l'orifice de prélèvement et de remplissage (14) disposé dans le fond (8) de l'autre cuve creuse (1).

2. Récipient réutilisable en acier selon la revendication 1, caractérisé en ce que l'anneau porteur (9) est raccordé à la cuve creuse (1) à la même distance axiale et radiale que l'anneau d'assise (12) à la cuve creuse (2).

3. Récipient réutilisable en acier selon la revendication 1 ou 2, caractérisé en ce que l'anneau d'assise (12) présente un décrochement (15) réalisé en symétrie de révolution par rapport à l'axe longitudinal du récipient, décrochement dont le diamètre intérieur correspond au diamètre intérieur de l'extrémité axiale de l'anneau porteur (9).

4. Récipient réutilisable en acier selon l'une des revendications 1 à 3, caractérisé en ce que les anneaux porteur et/ou d'assise (9, 12), sont repliés vers l'intérieur du récipient à la hauteur des zones de raccord (17) avec les cuves creuses (1, 2).